# NEW EUROPEAN PATENT SPECIFICATION

(11) **EP 0 339 491 B2**
(45) Date of publication and mention of the opposition decision: **04.12.1996**
(45) Mention of the grant of the patent: 18.09.1991
(21) Application number: 89107128.4
(22) Date of filing: 20.04.1989
(51) Int. Cl.: A23D 7/06

(54) **A method for the packaging of oil, in particular edible oil, in flexible packages**
Verfahren zum Verpacken von Öl, insbesondere essbarem Öl, in flexiblen Verpackungen
Procédé de conditionnement d'huile, particulièrement d'huile comestible, dans des emballages flexibles

(30) Priority: 28.04.1988 SE 8801592
(43) Date of publication of application: 02.11.1989
(73) Proprietor: AB PROFOR, 221 86 Lund (SE)
(72) Inventor: Wartenberg, Erwin, Dr., D-7000 Stuttgart 71 (DE)
(74) Representative: Müller, Hans-Jürgen, Dipl.-Ing.

(56) References cited:
- EP-B- 0 117 002
- DE-A- 2 039 392
- FR-A- 573 718
- JP-A-60 049 097
- JP-A-61 141 842
- US-A- 4 259 360
- JOURNAL OF THE AMERICAN OIL CHEMISTS SOCIETY, Vol 61, No. 3, March 1984, K. WARNER et al "Flavor and Oxidative Stability of Hydrogenated and Unhydrogenated Soybean Oils. Efficacy of Plastics Packaging".
- NETHERLAND MILK DAIRY JOURNAL 27, 1973 p 379-398, C. KEHAGIAS et al "Storage of butler oil unter various conditions"
- Prospectus of "Liquid Carbonic" about Nitrogen sparging of edible oils, 1976
- Römpps Chemie-Lexikon, 7th ed. vol. 5, p. 3343
- JAOCS, vol. 61, n 3, pp. 548-551
- Netherland Milk Dairy Journal, 1973, pp. 379-398

## Description

The present invention relates to a method for the packaging of oil, in particular edible oil, in flexible packages without a risk of deformation of the package on storage whereupon the containers are shaped and sealed at the end parts. It is known that oil, e.g. edible oil, is packaged and supplied in flexible packages of plastic material or plastic-coated paper. It is also a known fact that these packing containers after storage for a certain time tend to be deformed through caving in of the wall sides of the package. This phenomenon occurs mainly in those packages where the packing container is not wholly filled but where a gas-filled space exists which occupies the volume of the packing container which has not been taken up by the contents proper. This gas volume, formed because the packing container cannot be filled completely with contents, is generally referred to in the trade as "headspace".

The closing of a package can be done in many different ways. It is possible, for example, to fit a cap on a neck or flange arranged beforehand and provided with threads, a wafer or cover strip can be fitted over an opening hole, or a closure may be formed through folding of the packing material which is made tight and mechanically durable through, for example, heat-sealing, which implies that surfaces of the packing material pressed against one another are fused together owing to heat being furnished at the same time as the surfaces intended for sealing are pressed against one another by external devices. In the latter case, of course, the packing material must be of the kind which allows heat-sealing, which is true of most thermoplastics. The packing containers formed by folding referred to here are manufactured mostly from a laminate material comprising a carrier layer of cardboard which has thermoplastic coatings on both sides.

On the occasion of sealing the packing container is thus filled on the one hand with the contents introduced and on the other hand with the gas volume which has been enclosed together with the contents. Since packages in general are filled and sealed in air, the said air volume or gas cushion consists mostly of air, that is to say of a mixture of mainly oxygen gas and nitrogen gas. It has been found that e.g. edible oil has a very good dissolving power for gases of the type of oxygen gas and nitrogen gas and that the dissolving, at least initially, occurs very rapidly. If the contents are constituted of oil, e.g. edible oil, the gas in the gas cushion, therefore, will dissolve relatively rapidly in the oil, whereby it occupies a substantially smaller volume than in undissolved state. Thus a "potential vacuum" occurs in the package which entails a deformation of the package wall as the outer pressure will be higher than the pressure inside the package. It is worth noting that a certain gas passage also occurs through the packing material so that oxygen gas and nitrogen gas penetrate the packing material and enter into the package. This penetration of outside air, however, is substantially slower than the solution of nitrogen gas and oxygen gas in the oil, so that the deformation phenomenon will occur after a relatively short period of storage. The problem can be solved by using packages of a packing material which is so firm that it is not deformed and it is known that sheet metal packages frequently have been used for the packaging of oils.

One disadvantage of packages with air inclusion is that the atmospheric oxygen on dissolving in the oil contributes to oxidation processes which impair the quality of the oil and, in the case of edible oil, its taste. The air cushion which is formed in the packaging of oil thus has a double negative effect.

The disadvantages mentioned here can be remedied, however, by the present invention according to claim 1. Claim 2 claims a preferred method.

FR-A-573718 discloses the complete exchange of Oxygen by Nitrogen in order to improve the storage properties of oils. This document does not afford any hint that the problem as indicated in the foregoing could be solved by the claimed subject matter.

The invention will be described in the following with reference to the attached drawing, wherein
Figure 1 shows a schematic sketch of the filling procedure, whereas
Figure 2 shows graphically the connection between the air absorption of the edible oil which has been saturated with nitrogen and the edible oil which has not been saturated with nitrogen respectively.

In the following description it is assumed that the package is constituted of a package body consisting of plastic-coated paper or cardboard in the form of sheets or of a web, the material being formed to a tube in that the longitudinal edges of the sheet or the web are joined to one another in a tight joint and that at least one end of the package is closed in that the end parts of the tube after the filling are joined together and flattened and that they are sealed to one another with the help of heat and pressure, whereafter the sealed end parts of the tube can be shaped to an end wall through folding along folding lines provided beforehand. The invention may be applied, of course, to types of packages other than those mentioned here, but since packages of this type frequently are relatively thin-walled the deformation problem occurs more often on such packages.

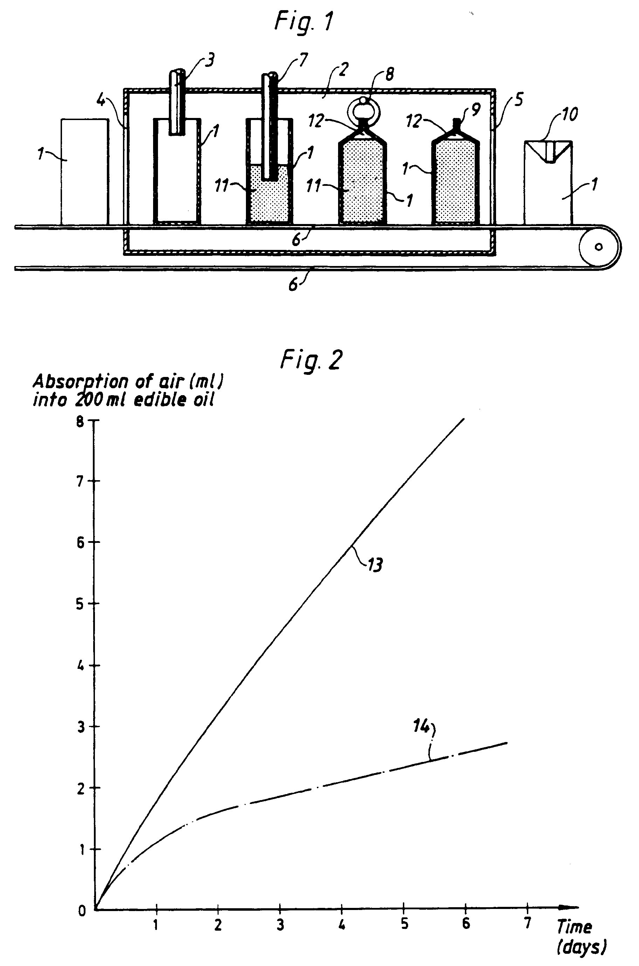

When the package which is constituted of a tube of arbitrary cross-section has been formed and been provided in optional manner with an end wall, the packing container 1 is introduced into a separately arranged chamber 2 in the manner as shown in Fig. 1. In the chamber 2 a nitrogen gas atmosphere is maintained by introducing nitrogen gas through the feed pipe 3, and in order to prevent air from entering the chamber 2 steps are taken to ensure that the pressure of nitrogen gas in the chamber 2 is somewhat higher than atmospheric pressure. Nitrogen gas will leak out through the inlet opening 4 of the chamber 2 and its outlet opening 5 and in order to prevent excessive leakage of nitrogen gas the openings 4 and 5 can be provided with plastic or rubber flaps which essentially seal off the space of the chamber except during the passage in and out of the packages 1 when the said sealing components are moved aside. The packages 1 are passed through the chamber 2 with the help of a conveyor belt 6 on which the packing containers 1 are arranged. In the chamber is provided, moreover, a filling pipe 7 for the contents and a closing device 8.

The package 1 which is empty but provided with a base is placed on a conveyor belt 6 with the opening of the package directed upwards and with the help of the conveyor belt the package 1 is introduced into the chamber 2 by passing through the inlet opening 4. In the chamber 2 is maintained a pressure of nitrogen gas (N₂) and nitrogen gas is introduced continuously through the inlet duct 3 which is directed so that a nitrogen gas stream will be directed down into each packing container introduced as it passes by the inlet duct 3. Through this arrangement the air in the packing containers 1 is effectively flushed out and the containers 1 are filled with nitrogen gas. The packing containers 1 are conducted further by means of the conveyor belt 6 to a station where a filling pipe 7 is directed down into the package, whereafter the latter is filled with the intended product, that is to say in the present case edible oil which has been saturated with nitrogen gas. As mentioned earlier, edible oil cannot be filled up to the top edge of the package 1, partly because the oil would run out owing to the movements which occur at the movement of the package with the help of the conveyor belt 6, and partly because the surfaces which are to be sealed to one another must not come into contact with the edible oil, since the sealing would then become difficult or rendered impossible. A further reason which applies to the present case is that the upper part of the package is constituted of lugs which jointly are to form the end wall of the package in that the lugs are folded in over the package. This means that the package cannot be filled completely, since the final volume is considerably smaller than the volume the package takes up before closing. It has to be accepted, therefore, that a certain part of the package will contain a gas cushion which, however, in the present case will be constituted of nitrogen gas, since the atmosphere inside the chamber 2 is constituted of nitrogen gas. After the filling operation, the packing container is transported to the closing device 8 where in the presence of heat and pressure sealing jaws press together the upper edge zones of the package 1, so as to form a sealing fin 9. The package 1 is now sealed and is removed from the chamber 2, whereafter outside the chamber 2 the package 1 can be finished by folding so that it obtains a plane end wall 10. The edible oil 11 which is filled in through the filling pipe 7 has been treated beforehand in such a manner that it has become saturated with nitrogen gas (N₂). This may be done in that the oil is stored during a long period in a tank where the air has been replaced by nitrogen gas, or in that the oil in some other manner is brought into contact with a nitrogen gas atmosphere so that it is made possible for the nitrogen gas to dissolve in the oil and be absorbed by the same. As is evident from Fig. 1, a space 12, so-called headspace, is formed during the sealing which in the case described here is filled with nitrogen gas, since a nitrogen gas atmosphere prevails inside the chamber 2. Owing to the edible oil 11 in the package having been saturated already with nitrogen gas, the quantity of nitrogen gas which is enclosed in the space 12 cannot be absorbed by the edible oil, and the potential vacuum accompanied by the characteristic caving in of the wall portions of the package, which is common in oil packages containing untreated oil, is not experienced.

The dissolving power of the edible oil for air is exemplified in Fig. 2 which shows a diagram wherein the horizontal axis indicates the time in days along a linear scale and the vertical axis indicates how much air is absorbed by 200 ml edible oil. The vertical axis is graded in millilitres. The curve designated by 13 represents edible oil which has not been pretreated through nitrogen saturation, whereas the curve 14 represents edible oil which has been saturated with nitrogen gas. As is evident from the curve according to Fig. 2, the curves 13 and 14 separate from one another already after a few days, and after six days the air absorption in the untreated edible oil can be read as approx. 8.5 ml, whereas the corresponding figure for edible oil which previously has been saturated with nitrogen gas is only approx. 2.5 ml. The absorption of air in the treated edible oil is thus approx. three times greater than in the treated edible oil, and a gas absorption which is even less is obtained if the measurement is carried out with nitrogen gas only as an absorption gas. It is possible, therefore, by saturating edible oil beforehand with nitrogen gas, which gas does not cause any lowering of the quality of the oil, to achieve the advantage that the package wherein the edible oil is stored is not deformed, at the same time as the quality of the edible oil is better maintained. It is correct in itself that packages containing edible oil, which are deformed owing to the absorption of the air enclosed in the package are being reinflated after some time owing to air, or gases occurring in air, penetrating the walls of the package. Such a refilling of the package does not occur in all types of packages, and where it does happen, so much oxygen gas has been introduced as a rule as to render the edible oil unusable or, in any case, greatly reduced in quality.

It is thus possible by means of the method in accordance with the invention on the one hand to retain the shape of the package even after long-term storage, and on the other hand to protect the packed edible oil. It is a further advantage that the method for realization of the invention is relatively simple and inexpensive.

## Claims

1. Method for packaging of oil, in particular edible oil, as filling goods in flexible packages and packaging containers (1), respectively, of relatively thin packing material wherein said containers (1) are filled by said oil (11) whereupon the containers are shaped and sealed at the end parts,
**characterized in that**
a) nitrogen gas (N₂) is dissolved in liquid oil (11) up to saturation prior to the filling said filling good into said packing container (1),
b) said liquid oil (11) which absorbed nitrogen gas (N₂) and additionally nitrogen gas (N₂) rather than air is filled into said packing container (1),
c) said closing is carried out in a manner as to form a space (12) above said fluid oil (11) within said closed container (1) which space (12) is filled by nitrogen gas (N₂) rather than by air thereby avoiding the risk of deformation of the filled and closed container (1) on storage.

2. Method as claimed in claim 1, characterized in that an empty container (1) with the opening directed upwards is introduced into a filling chamber (2) wherein a pressure of nitrogen gas (N₂) is maintained, that a stream of nitrogen gas (N₂) is directed down into said container (1) in order to flush out air from it, that said container (1) filled with nitrogen gas (N₂) is partially filled with liquid oil (11) saturated with nitrogen gas (N₂), and that the packing material of said filled container (1) is sealed in the presence of heat and pressure thereby forming a sealing fin (9) of the packing material at the upper edge zone after closing said space (12) consisting of nitrogen gas (N₂) rather than air.

## Patentansprüche

1. Verfahren zum Verpacken von Öl, insb. Speiseöl als Füllgut in flexiblen Packungen bzw. Verpackungsbehältern (1) aus relativ dünnem Verpackungsmaterial, bei dem die Behälter (1) mit dem Öl (11) gefüllt und anschließend an den Endteilen verformt und versiegelt werden,
**dadurch gekennzeichnet**,
a) daß vor dem Füllen des Füllguts in den Verpackungsbehälter (1) Stickstoff (N₂) in flüssigem Öl (11) bis zur Sättigung gelöst wird;
b) daß das flüssige Öl (11), das StickstOff (N₂) absorbiert hat, und zusätzlich Stickstoff (N₂) statt Luft in den Verpackungsbehälter (1) eingefüllt wird, und
c) daß das Verschließen derart durchgeführt wird, daß ein Raum (12) über dem flüssigen Öl (11) innerhalb des geschlossenen Behälters (1) gebildet wird, welcher Raum (12) durch Stickstoff (N₂) statt durch Luft gefüllt ist, um die Deformierungsgefahr des gefüllten und geschlossenen Behälters (1) beim Lagern zu vermeiden.

2. Verfahren nach Anspruch 1,
**dadurch gekennzeichnet**,
daß ein leerer Behälter (1) mit der nach oben gerichteten Öffnung in eine Füllkammer (2) eingeführt wird, in der ein Gasdruck von Stickstoff (N₂) aufrechterhalten ist, daß ein Stickstoffstrom in den Behälter (1) nach unten gerichtet wird, um Luft aus diesem auszuspülen, daß der Behälter (1), der mit Stickstoff (N₂) gefüllt ist, teilweise mit flüssigem Öl (11), das mit Stickstoff (N₂) gesättigt ist, gefüllt wird und daß das Verpackungsmaterial des gefüllten Behälters (1) in Anwesenheit von Wärme und Druck so versiegelt wird, daß sich hierdurch eine Schweißrippe (9) bzw. Versiegelungsnaht oder ein Versiegelungssteg des Verpackungsmaterials an der oberen Randzone nach dem Verschließen des Raumes (12), der Stickstoff (N₂) statt Luft aufweist, bildet.

## Revendications

1. Procédé pour l'emballage d'huile, en particulier d'huile comestible, en tant que produits de remplissage respectivement dans des récipients de conditionnement (1) et emballages flexibles, en matériau d'emballage relativement mince, lesdits récipients (1) étant remplis avec ladite huile (11) après quoi les récipients sont mis en forme et scellés à leurs parties d'extrémité, caractérisé en ce que
a) de l'azote gazeux (N₂) est dissous dans l'huile liquide (11) jusqu'à saturation avant de remplir ledit récipient de conditionnement (1) avec ledit produit de remplissage,
b) on remplit ledit récipient de conditionnement (1) avec ladite huile liquide (11) qui a absorbé l'azote gazeux (N₂), et en outre de l'azote gazeux (N₂) plutôt que de l'air,
c) on effectue ladite fermeture d'une manière à former un espace (12) au-dessus de ladite huile fluide (11) à l'intérieur dudit récipient fermé (1), lequel espace (12) est rempli d'azote gazeux (N₂) plutôt que d'air, moyennant quoi on évite le risque que le récipient (1) rempli et fermé ne se déforme pendant son stockage.

2. Procédé selon la revendication 1, caractérisé en ce que
un récipient vide (1) dont l'ouverture est dirigée vers le haut est introduit dans une chambre de remplissage (2) dans laquelle est maintenue une pression d'azote gazeux (N₂), en ce qu'un courant d'azote gazeux (N₂) est dirigé vers le bas dans ledit récipient (1) de manière à en chasser l'air, en ce que ledit conteneur (1)rempli d'azote gazeux (N₂) est rempli partiellement d'huile liquide (11) saturée d'azote gazeux (N₂), et en ce que le matériau d'emballage dudit récipient rempli (1) est scellé sous chaleur et pression, de façon à former une ailette de scellage (9) de matériau d'emballage dans la zone de bord supérieur consistant, après la fermeture dudit espace (12), en azote gazeux (N₂) plutôt qu'en air.
